# EUROPEAN PATENT SPECIFICATION

(11) **EP 3 579 806 B1**
(45) Date of publication and mention of the grant of the patent: **01.03.2023**
(21) Application number: 17792172.3
(22) Date of filing: 31.10.2017
(51) Int. Cl.: A61G 5/02, A61G 5/04, A61G 5/10, B62K 11/00

(54) **MODULAR DRIVING SYSTEM FOR A WHEELCHAIR**
MODULARES ANTRIEBSSYSTEM FÜR EINEN ROLLSTUHL
SYSTÈME D'ENTRAÎNEMENT MODULAIRE POUR FAUTEUIL ROULANT

(30) Priority: 10.02.2017 GB 201702215
(43) Date of publication of application: 18.12.2019
(73) Proprietor: Roma Medical Aids Limited, Bridgend CF31 3TB (GB)
(72) Inventor: PITT, John, Bridgend CF31 3TB (GB); HIGGINS, Gavin, Bridgend CF31 3TB (GB)
(74) Representative: Murgitroyd & Company
(86) International application number: PCT/GB2017/053264
(87) International publication number: WO 2018/146438

(56) References cited:
- DE-C1- 10 048 532
- US-A1- 2014 035 246
- US-B1- 9 688 340
- US-B1- 9 744 095
- US-B2- 8 738 278

## Description

### FIELD

The invention relates to a system. Particularly, but not exclusively, the invention relates to a system for driving a wheelchair. Further particularly, but not exclusively, the invention relates to a wheelchair comprising such a system.

### BACKGROUND

A wheelchair is a type of chair used by people who have difficulty walking either due to injury or a congenital condition. A wheelchair is typically moved manually by pushing the wheels or by automated systems which can be controlled by the wheelchair user.

When wheelchair users age it is not uncommon for them to feel the necessity to change from using a manually operated wheelchair to a wheelchair which is powered by an electronic system. This can often lead to perceived stigma amongst wheelchair users who view the need for electronic systems as motivated by worsening disability. Such powered wheelchairs can often be large and cumbersome.

Simpler, more discrete, means of powering wheelchairs are required which can mitigate against such perceived stigmas.

Aspects and embodiments have been conceived with the foregoing in mind. A driving module similar to the one of the invention can be found in US9688340. This document discloses a "hoverboard" with a accessory to allow a user to operate the device while seated. The seat is a separate component, without any additional function towards independent use. The actuation and steering of the device is enabled by two handles.

### SUMMARY

Aspect relate to seated invalid appliances, such as, for example, wheelchairs, which are used by individuals who have difficulty walking.

Viewed from a first aspect, there is provided a system for driving a wheelchair, the system comprising a driving module for driving the wheelchair across a surface, a control module coupled to the driving module, wherein the control module is configured to be coupled to at least one wheelchair wheel and the control module is further configured to transmit an output to the driving module responsive to receiving an input generated by actuation of the at least one wheelchair wheel, wherein the driving module, responsive to receiving the output from the control module, is configured to drive the wheelchair across the surface.

The effect of a system in accordance with the first aspect is that the control module is operative to generate an output responsive to actuation of one of the wheelchair wheels which is then used to drive the wheelchair across the surface.

The driving module may comprise at least one driving wheel wherein each of the at least one driving wheels may be operative to be driven across a surface to drive the wheelchair across the surface.

The at least one driving wheel may comprise a pair of wheels each operative to be driven across a surface to drive the wheelchair across the surface.

The control module may configured to be coupled to a pair of wheelchair wheels and is operative to receive a first input generated by actuation of a first wheel in the pair of wheelchair wheels and is further operative to receive a second input generated by actuation of a second wheel in the pair of wheelchair wheels.

The control module may be configured to receive the first input independently of the second input. The effect of this is that the control module may receive a first input from one wheel and a second input from another wheel. This increases the range of inputs that can be delivered from the wheels to the control module.

The input generated by actuation of the at least one wheelchair wheel may be generated by movement of the at least one wheelchair wheel.

The control module may comprise at least one gyroscope which is operative to be actuated between a plurality of states responsive to receiving the input generated by actuation of the at least one wheelchair wheel.

The plurality of states may correspond to the direction in which the wheelchair is to be driven across the surface.

The actuation of the gyroscope into a first state may generate an output indicating that the driving module should drive the wheelchair across the surface in a first direction and further wherein actuation of the gyroscope into a second state may generate an output indicating that the driving module should drive the wheelchair across the surface in a second direction.

The at least one gyroscope may comprise first and second gyroscopes, wherein each gyroscope may be coupled to a respective first or second wheel coupling mechanism.

The actuation of the gyroscope into the first state may be responsive to a first movement of the respectively coupled wheel coupling mechanism and further wherein the actuation of the gyroscope into the second state may be responsive to a second movement of the respectively coupled wheel coupling mechanism.

The control module may comprise first and second control sub-modules, wherein each control sub-module may be operative to receive input from a respective one of a first or second wheel coupling mechanism which is configured to be coupled to a wheel of the wheelchair.

Each of the control sub-modules may comprise a switch which is actuatable between a plurality of states responsive to receiving the input generated by actuation of the at least one wheelchair wheel.

Actuation of the switch into a first state generates an output indicating that the driving module should drive the wheelchair across the surface in a first direction and further wherein actuation of the switch into a second state generates an output indicating the driving module should drive the wheelchair across the surface in a second direction.

The driving module drives the wheelchair across the surface in a direction indicated by the output generated by actuation of the switch or the gyroscope. The effect of this is that the direction in which the wheelchair is driven is controlled by the input delivered through the wheelchair wheels.

The control module may comprise wheel coupling members arranged to couple to a respective wheelchair wheel.

The wheel coupling members may be wheelwells.

The system is configured to be rolled in a first direction to enable the at least one wheel to be coupled to the control module. The effect of this is that the system can be coupled to the wheels of the wheelchair by rolling the system into a position where the control module can couple to the wheels of the wheelchair. This means that additional human help is not needed in order to couple the wheelchair to the system.

Responsive to the coupling of the control module to the at least one wheel, the control module may be configured to lever the respectively coupled wheels into an elevated position relative to the surface.

Viewed in accordance with a further aspect, there is provided a system for driving a wheelchair, the system comprising a driving module for driving the wheelchair across a surface and a control module coupled to the driving module, wherein the control module is configured to enable the system to be rolled in a first direction into coupled engagement with the wheels of the wheelchair, wherein, upon rolling the system into coupled engagement with the wheels of the wheelchair, the control module is operative to convert actuation of the wheels into an output to the driving module.

A system in accordance with the invention enables a wheelchair to be coupled to the system simply by rolling the system in a first direction such that it may be coupled to the wheels of the wheelchair. The wheels of the wheelchair can then be actuated to provide input to the system in order to drive the wheelchair across a surface.

Responsive to receiving the output from the control module, the driving module may be configured to drive the wheelchair across the surface.

The driving module may comprise at least one driving wheel wherein each of the at least one driving wheels is operative to be driven across a surface to drive the wheelchair across the surface.

The at least one driving wheel comprises a pair of wheels each operative to be driven across a surface to drive the wheelchair across the surface.

The control module may comprise first and second wheel coupling mechanisms each arranged to couple to a wheel of a wheelchair, wherein movement of the wheel coupling mechanisms generates an input to the control module which generates a corresponding output to the driving module.

Movement of the wheel in a first direction may be converted by the control module into an output indicative of a movement in a first direction and movement of the wheel in a second direction may be converted by the control module into an output indicative of a movement in a second direction.

Responsive to receiving an output indicative of a movement in a first direction, the driving module may be configured to drive at least a part of the wheelchair in a first direction and, responsive to receiving an output indicative of a movement in a second direction, the driving module may be configured to drive at least a part of the wheelchair in a second direction.

The effect of this is that driving module may drive one side, the left side, say, of a wheelchair, in a first direction and may drive another side, the right side, say, of a wheelchair, in a second direction. This feature enables the system to be used to drive the wheelchair in forward, backward, left and right directions.

Viewed from an aspect, there is provided an apparatus for coupling to a wheelchair, the apparatus comprising a first wheel coupling member for coupling to a first wheelchair wheel and a second wheel coupling member for coupling to a second wheelchair wheel and a control module coupled to each of the first wheel coupling member and the second wheel coupling member, wherein the control module is operative to drive a first output wheel and a second output wheel responsive to input from the first wheel coupling member and/or input from the second wheel coupling member.

The effect of an apparatus in accordance with this aspect is that the apparatus can be used to drive a wheelchair based on input which is generated responsive to input from first and second wheel coupling members.

The input from the first wheel coupling member and/or the input from the second wheel coupling member may be generated by movement of the respective wheel coupling member.

This enables the input to be delivered to the control module by movement of the wheels of the wheelchair.

The first and second wheel coupling members may be operative to hold the wheelchair wheels in an elevated position relative to a floor surface when the respective wheelchair wheels are coupled to the respective wheel coupling members.

An apparatus according to an aspect may comprise first and second wheel coupling members which couple to the wheels of a wheelchair and lift the wheels from the floor so that they may be replaced by gyroscope wheels which are controlled by a gyroscopic module. The control module receives input commands from the wheels which causes the gyroscope wheels to be driven.

By providing commands through the wheels, the wheelchair to which the apparatus is coupled can be driven with commands that are provided through the wheels which provides a more natural input mechanism for a user of a wheelchair.

The first and second wheel coupling members only need to have contact with the wheels they are coupling to for the apparatus to be given effect.

The first wheel coupling member and the second wheel coupling member may each comprise a wheelwell for respective reception of the first or second wheelchair wheel.

A wheelwell is an element of the apparatus which receives the respective wheels of the wheelchair and retains the wheelwell in place whilst the apparatus is in use.

The first wheel coupling member and the second wheel coupling member may be coupled to the gyroscopic module in such a way that movement of the first wheel coupling member causes parallel movement (to the movement of the first wheel coupling member) of the gyroscopic module and that movement of the second wheel coupling member causes parallel movement of the gyroscopic module.

The effect of this is that movement of the wheels of the wheelchair can be used to provide input to the control module and, therefore, movement of the wheels of the wheelchair can be used to generate movement of the gyroscope wheels.

The input to the control module can be provided responsive to a single push of the wheelchair wheels. The effect of this is that the gyroscope wheels are driven responsive to a single push on the wheelchair wheels.

The first and second wheelwell may each comprise a camber member for engagement with a floor surface during reception of the respective wheelchair wheel into the respective first or second wheelwell.

The wheelwell may be configured to form a lever on the floor surface during reception of the respective wheelchair wheel to lift the respective wheel from the floor surface when the respective wheelwell is coupled to the respective wheelchair wheel.

The effect of this is that the wheelwell, as part of the respective wheel coupling member, is used to lever the wheel into coupled engagement with the wheel coupling member. This causes the respective wheel to be lifted from the floor surface.

This means that the apparatus can be coupled to the wheelchair without any additional human input, which increases the independence of the user.

The gyroscopic module may comprise first and second gyroscopes, wherein the first gyroscope is configured to drive the first gyroscope wheel responsive to movement of the first wheel coupling member and the second gyroscope is configured to drive the second gyroscope wheel responsive to movement of the second wheel coupling member.

The effect of this is that each wheelchair wheel may be coupled to a respective gyroscope and therefore the wheelchair wheels may be used to input separate commands to the apparatus through movement of the wheel coupling members. This enables a forward command, say, to be input through one of the wheels, and a backward command, say, to be input through another of the wheels.

This enables the apparatus to be used to instruct the apparatus to drive one gyroscope wheel in a forward direction and another gyroscope wheel in a backward direction. By enabling one wheel to be driven in a forward direction and another wheel to be driven in a backward direction the apparatus can be used to implement commands to turn the wheelchair left or right.

The first gyroscope and the second gyroscope may be independently coupled to a pivot point about which the first gyroscope and the second gyroscope rotate responsive to respective movement of the first wheel coupling member and the second wheel coupling member to enable the first gyroscope and the second gyroscope to rotate independently about the pivot point.

The independent coupling of the first and second gyroscope to a pivot point means that the first gyroscope and the second gyroscope can move independently relative to the pivot point. This mitigates against the possibility of a pivot point resisting a turn in one direction because it is being biased in another direction.

Each of the gyroscopes may be coupled to a first end of a respective first or second arm and the pivot point is coupled to a respective end of a respective first or second arm.

The effect of this is that the pivot point can be held at an upper position relative to the gyroscope.

Each of the first and second gyroscopes may be contained inside a gyroscope housing. The effect of this is that the components of the first and second gyroscopes are sealed from the external environment which reduces the impact of environmental factors on the operation of the gyroscopes.

The first and second gyroscopes may be coupled to respective control circuitry which may be, in turn, coupled to the gyroscope wheels so that commands to the gyroscope wheels may be transmitted.

The apparatus may further comprise a cable coupled at a first end to the gyroscopic module and comprising a control stick at a second end for providing user input to the gyroscopic module.

The control stick may further comprises a coupling means to couple the cable to the wheelchair. The coupling means may be a hook.

The effect of this is that the control stick may be located in a location which is convenient for the user of the wheelchair to provide commands to the apparatus.

The cable may be a curly cable. The effect of this is that the location of the control stick can be extensively varied to suit the user of the wheelchair.

The control stick may comprise a power button to enable a user of the wheelchair to provide a power on or a power off command to the gyroscopic module.

The first wheel coupling member and the second wheel coupling member may be movable between a deployed position and a stowed position.

The effect of this is that the apparatus may be made more compact for storage.

The first wheel coupling member and the second wheel coupling member may be adjustable in dimension to vary the wheels that can be coupled to the respective wheel coupling member.

An assembly may be provided which comprises a system in accordance with an aspect and a wheelchair arranged to coupled to that system.

The wheelchair may comprise a pair of wheels, wherein each wheel comprises an inner rim to define a space between the inner rim and the wheel and wherein, during coupling of the wheelchair to the system, the wheels are arranged to frictionally engage the system to correctly align the wheels

### DESCRIPTION

An embodiment will now be described by way of example only and with reference to the following figures in which:
Figure 1a is a schematic illustration of an apparatus in accordance with the embodiment;
Figure 1b is a schematic illustration of an apparatus in accordance with the embodiment;
Figure 1c is a schematic illustration of a wheelwell in accordance with the embodiment;
Figure 1d is a schematic illustration of the independent movement of the first and second wheelwells about a pivot point;
Figure 1e is a schematic illustration of the apparatus in accordance with the embodiment;
Figure 1f is a schematic illustration of the apparatus in accordance with the embodiment;
Figure 2 is an illustration of a cross section through a gyroscopic unit in accordance with the embodiment;
Figure 3a is an illustration of an apparatus in accordance with the embodiment being coupled to the wheels of a wheelchair;
Figure 3b is an illustration of the apparatus in accordance with the embodiment coupled to the wheels of a wheelchair;
Figure 3c is an illustration of a side view of the apparatus when the wheelwells have been coupled to the wheels of a wheelchair;
Figure 3d is an illustration of an aspect view of a wheelchair coupled to the apparatus;
Figure 4a is a cross sectional view of a gyroscopic unit in its steady state;
Figure 4b is a cross sectional view of a gyroscopic unit in its forward state;
Figure 4c is a cross sectional view of a gyroscopic unit in its backward state;
Figure 5a is a cross sectional view of a left sided gyroscopic unit in its forward state;
Figure 5b is a cross sectional view of a right sided gyroscopic unit its backward state;
Figure 6a is a cross sectional view of a left side gyroscopic unit in its backward state; and
Figure 6b is a cross sectional view of a right sided gyroscopic unit in its forward state.

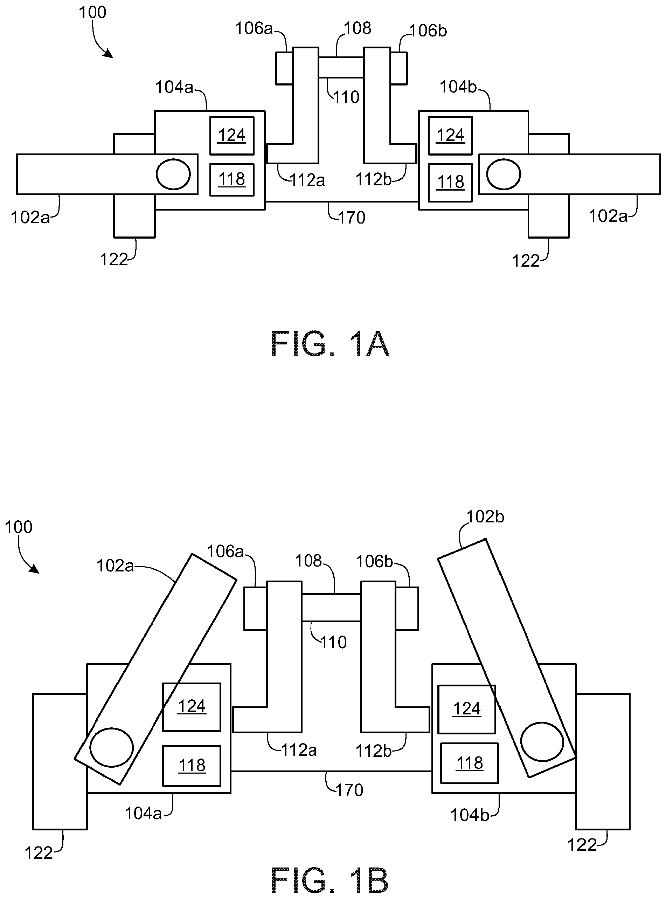

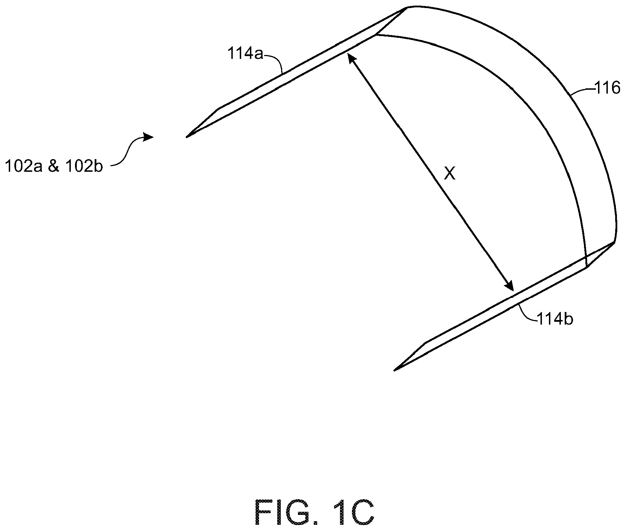

We will now describe an apparatus 100 in accordance with the first embodiment and with reference to Figures 1a, 1b and 1c.

Apparatus 100 comprises first and second steel wheelwells, 102a and 102b, which are each coupled to a respective first and second gyroscopic unit, 104a and 104b. Each of the gyroscopic units 104a and 104b comprise a gyroscope movable between a steady state, a forward state and a backward state. The first and second wheelwells 102a and 102b extend laterally outwards relative to the respective first and second gyroscopic unit 104a and 104b. The respective gyroscopes will be described later.

The respective first and second wheelwells are hingedly coupled to the gyroscopic units 104a and 104b in such a way that they can be moved from a deployed position into a stowed position. The stowed position is illustrated in Figure 1b.

Each of the gyroscopic units 104a and 104b are coupled to a pivot point 108 comprising an axle 110 by respective first and second arms, 112a and 112b, which act to independently couple each of the gyroscopic units 104a and 104b to the axle 110 in such a way that the gyroscopic units 104 and 104b can move independently around the axle 110. The first and second arms 112a and 112b are retained on the axle 110 by stops 106a and 106b.

That is to say, the pivot point 108 forms an articulation point for the gyroscope units 104a and 104b.

The gyroscope units 104a and 104b are each coupled to a gyroscope wheel 122 which is driven in a forward or backward direction by the respectively coupled gyroscope unit 104a or 104b. When the apparatus is in use the gyroscope wheels 122 form the point of contact between the apparatus 100 and the floor.

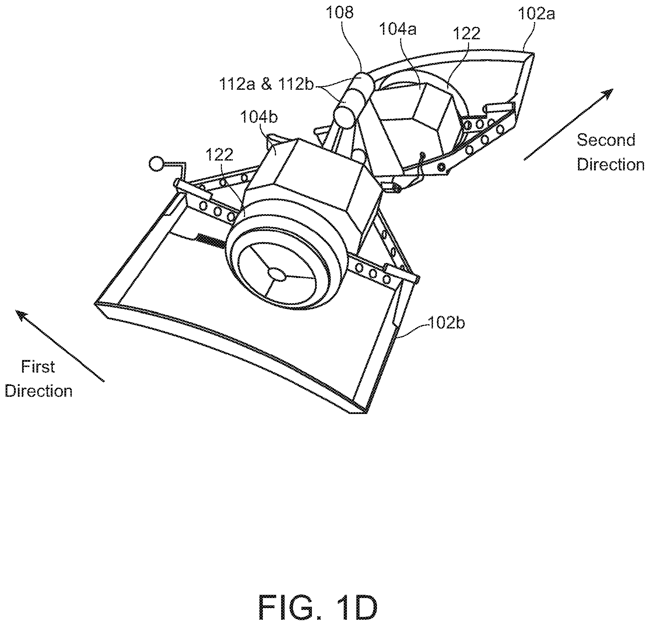

The use of the respective first and second arms 112a and 112b to independently couple the gyroscopic units 104a and 104b to the pivot point means that the pivot point 108 can be held at an elevated position relative to the gyroscopic units 104a and 104b. This reduces the possibility of turning effects from the pivot point 108 influencing the operation of the apparatus 100. The independent movement of the arms 112a and 112b is illustrated in Figure 1d where arm 112a is being moved in the second direction and arm 112b is being moved in the first direction 112b

The wheelwells 102a and 102b are statically coupled to the gyroscopic units 104a and 104b so that the direction of the wheelwells 102a and 102b directly dictates the direction of movement of the respective gyroscopic unit. That is to say, the wheelwells 102a and 102b are coupled to the respective gyroscopic units 104a and 104b in such a way that if the respective wheelwell is moved forward the respective gyroscopic unit is also moved forward and if the respective wheelwell is moved backward the respective gyroscopic unit is moved backward.

The wheelwells 102a and 102b are each shaped to receive a rear wheel of a wheelchair and comprise a pair of arms 114a and 114b which are rotatably coupled at a respective first end to the respective gyroscopic unit 104a and 104b to enable the wheelwells 102a and 102b to be moved from the deployed position where they will receive a wheel of a wheelchair into a stowed position. At the respective second end the pair of arms 114a and 114b are joined by an cross member 116, which may be cambered in an upward or downward direction or may form a straight section of length x between the arms 114a and 114b. The wheelwells 102a and 102b are illustrated in Figure 1c.

The wheelwells 102a and 102b may be shaped to receive a specific wheelchair wheel. In this case, the distance x may be approximately equal to the length of a chord across a portion of the wheel, the bottom eighth of the specific wheelchair wheel, for example. This will enable that wheelchair wheel to sit inside the wheelwell when it is received in the wheelwell but without enabling so much of the wheel to pass through the wheelwell that the wheel is not held above the floor.

The wheelwell 102a and 102b should be dimensioned such that the respective wheel is received inside the wheelwell and the wheelwell is used to hold the wheel off the ground.

Each of the gyroscopic units 104 a and 104b further comprise a battery pack 118 operative to provide power to a driving motors 120 to drive the respective gyroscope wheel 122 in a first or second direction. The battery pack 118 is also operative to provide power to control circuity 124.

A typical battery pack 118 would be a 36V 4400mAH battery pack but any other suitable battery pack can be used.

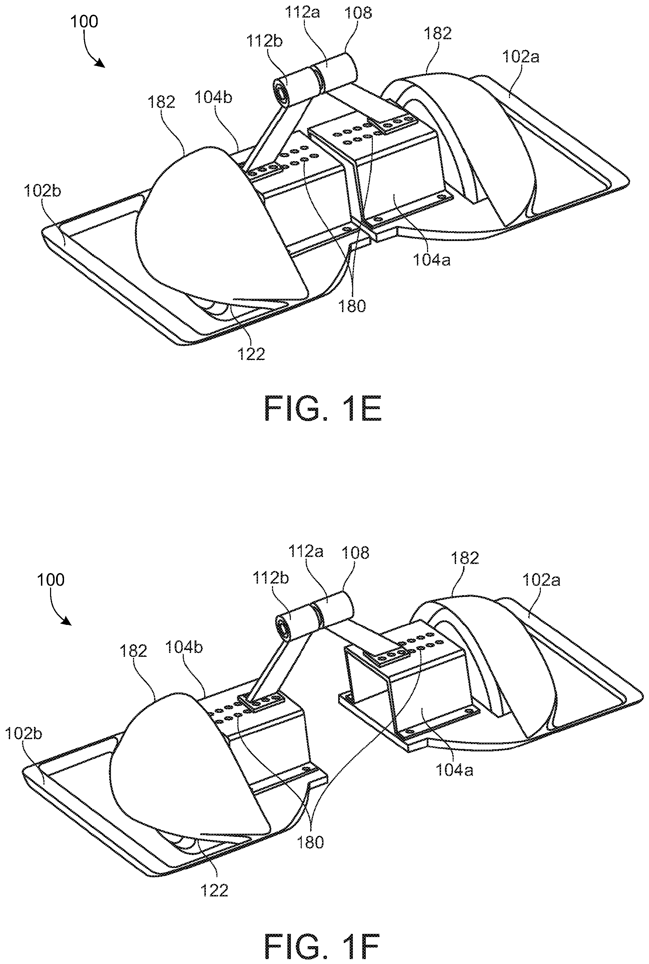

The coupling between the gyroscopic units 104a and 104b and the pivot point can be independently adjusted, as is illustrated in Figures 1e and 1f. Each of the arms 112a and 112b may comprise, at the end to be coupled to the respective gyroscope, a first plurality of rows of protrusions. Each of the gyroscopic units 104a and 104b comprise, on a surface, a plurality of rows of recesses 180 which are each shaped to engage one of the protrusions in the first plurality of rows of protrusions.

To couple the respective arm 112a and 112b to the respective gyroscope, the plurality of rows of protrusions are aligned with a corresponding plurality of the rows of recesses 180 and the protrusions are pressed into the recesses to form the coupling between the respective arm and the respective gyroscope unit.

The plurality of rows of recesses 180 is higher in number than the number of rows of protrusions in the plurality of protrusions. This means that the coupling between the respective arms and the respective gyroscopic unit can be adjusted.

As can be seen in Figure 1e, the respective arms 112a and 112b are coupled to the gyroscopic units 104a and 104b at the recesses 180 which are nearest to the wheel covers 182 which enables a narrower configuration of the apparatus 100 to be realised.

As can be seen in Figure 1f, the respective arms 112a and 112b are coupled to the gyroscopic units 104a and 104b at the recesses 180 which are farthest away from the wheel covers 182 which enables a wider configuration of the apparatus to be realised.

That is to say, due to the adjustable coupling between the respective arms 112a and 112b and the gyroscopic units the width of the apparatus 100 can be adjusted. This means that the same apparatus 100 can be used to drive a wide variety of wheelchairs.

The wheel covers 182 provide some protection for the wheels 122 from some environmental factors and also provide some protection for the wheelchair against debris which may be thrown up by the wheels 122 during use.

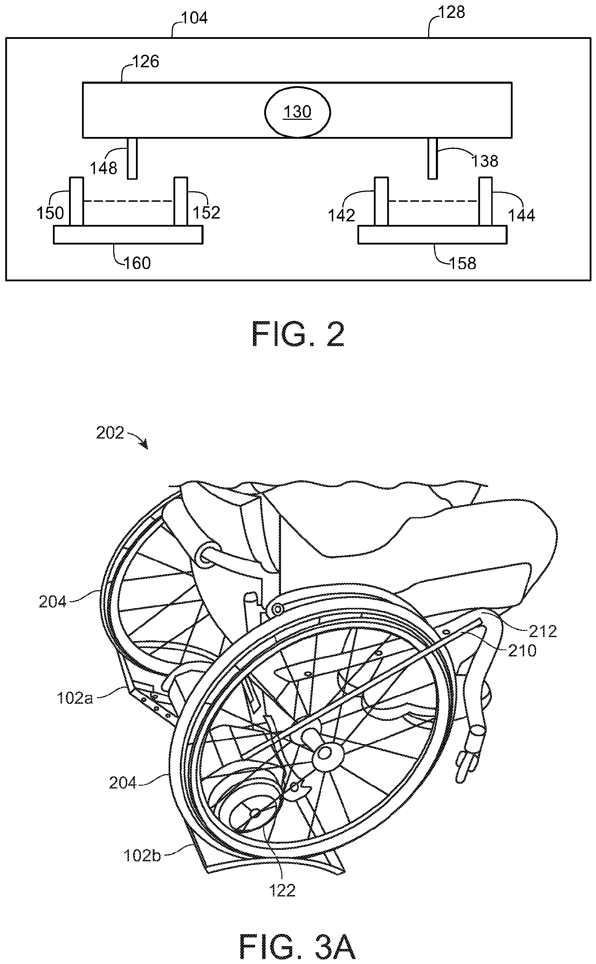

We illustrate a gyroscopic unit 104 in Figure 2a. This gyroscopic unit 104 is configured identically to each of gyroscopic units 104a and 104b.

The gyroscopic unit 104 comprises a directional movement panel 126 which is rotatably coupled to a housing 128 in such a way that the directional movement panel 126 will rotate freely about a rotating axle 130 responsive to the movement of the housing 128.

Each directional movement panel 126 is coupled to a first plastic wall member 138, which slides between a respective forward infrared LED 142, and a respective forward infrared sensor 144 and a second plastic wall member 148, , which slides between a respective backward infrared LED 150, , and a respective backward infrared sensor 152.

The respective infrared LEDs 142 and 150 emit light which is detected by the respective infrared sensors 144 and 152 when the directional movement panel 126 are in a steady state in which the gyroscopic units 104a and 104b have not been moved..

If both of the respective infrared sensors 144 and 152 are receiving light from the respective infrared LEDs 142 and 150 then the gyroscopic modules are in a steady state and no signal will be driven to the gyroscopic wheels 122 to drive them in any direction.

The forward infrared LED 142 and the forward infrared sensor 144 are mounted on a base 158. The backward infrared LED 150 and the backward infrared LED sensor 152 are mounted on a base 160.

The bases 158 and 160 contain all of the necessary circuitry for the battery pack 118 to provide power to the respective infrared LEDs and corresponding infrared sensors. The bases 158 and 158 also contain all of the necessary circuitry for signals to be passed from the infrared sensors to control circuitry 124.

The use of forward and backward to describe infrared LEDs and infrared sensors is to indicate the type of command they will generate as part of the respective gyroscopic unit 104a and 104b. The use of forward and backward is not intended to place any limitation on the orientation of the light emitted or detected by the respective infrared LED and infrared sensors or on the physical orientation of the respective infrared LED or infrared sensors.

In Figure 2 the directional movement panel 126 is in a horizontal position and the gyroscopic unit 104 is in a steady state position.

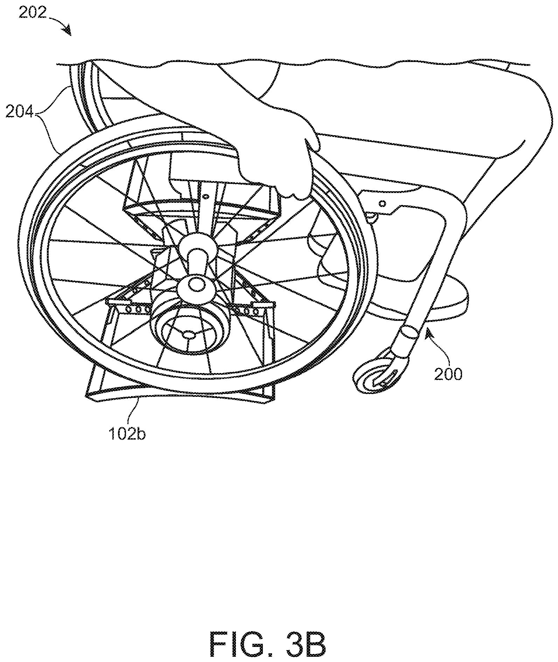

We now describe with reference to Figures 3a and 3b how apparatus 100 is coupled to the rear wheels of a wheelchair 200.

The user grabs a curly cable 210 and hooks the free end of the curly cable to the wheelchair 200. The curly cable 210 is coupled to battery pack 118 at a first end and comprises a hook at a second end to enable the second end to be coupled to the wheelchair 200. The second end also comprises a control stick 212 comprising a button which when pressed provides input to control circuitry 124 to draw power from battery pack 118 and which, when pressed again, provides input to control circuitry to cut off the supply of power from the battery pack 118.

The control stick 212 may also be wirelessly coupled to the control circuitry, i.e. the curly cable 210 would not be needed.

A wheelchair typically comprises two sets of wheels. A set of rear wheels 204 and a set of front wheels. The apparatus 100 will generally be coupled to the rear wheels 202

A user can move wheelwells 102a and 102b from their stowed position to their deployed position by pulling the wheelwells outwards about the rotational mounting between the arms and the respective gyroscopic unit

The apparatus 100 can then be placed onto the floor 202. When placed onto the floor 202 the gyroscope wheels 122 of the gyroscope units 104a and 104b will form a contact point with the floor 202.

The user can then sit in the wheelchair 200 and direct, i.e. by pushing, the rear wheels 202 towards the arms 114b of the wheelwells 102a and 102b. Contact between the arm 114b and the rear wheel 204 of the wheelchair will cause the respective wheelwells 102a and 102b to be pushed downwardly until the wheelwells 102a and 102b contact the floor 202. This will cause the apparatus to roll about the axle of the gyroscopic wheels 122 in the direction in which the wheelwells 102a and 102b are being pushed. This is illustrated in Figure 3a.

The continued movement of the wheels of the wheelchair mean that they will be received in the respective wheelwell. The continued movement of the wheels into the respective wheelwell will cause the wheels of the wheelchair to move across the wheelwell until the wheels contact the left arm 124 and push on the left arm which will in turn cause the respective wheelwell (102a or 102b) to provide a lever on the received wheel to lift the respective wheel off the floor 202 into a position in which the wheel is being received and retained inside the wheelwell and in which the wheelwell will occupy a substantially horizontal position. This is illustrated in Figure 3b. The engagement between the wheel of the wheelchair and the wheelwell is frictional in this instance but it will be evident to the skilled person that other forms of engagement between the wheels of the wheelchair and the wheelwell are possible.

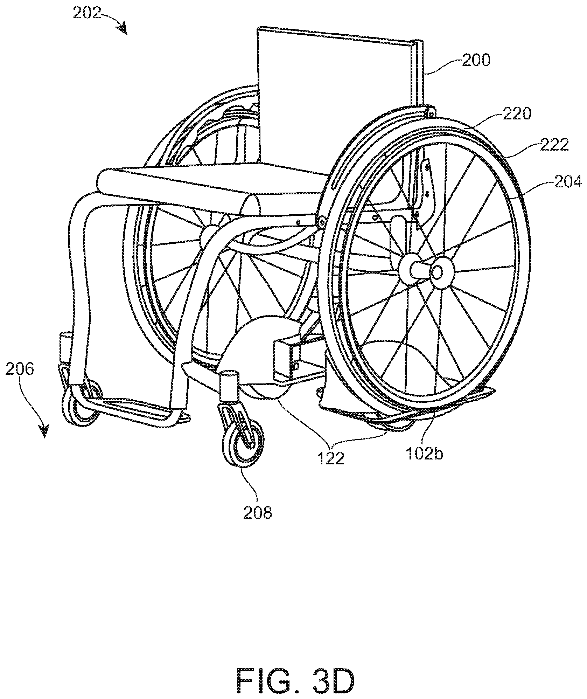

The leverage on the wheels received by the respective wheelwells 102a and 102b causes the rear and front wheels of the wheelchair to be lifted into an elevated position. Therefore it will be the gyroscope wheels 122 which support the wheelchair 100 on the floor. This is clearly shown in Figure 3d where the wheelchair200 is being held in an elevated position relative to the floor 202. The shadowing from the wheelchair on the floor 202 is enumerated with 206.lt is also illustrated in Figure 3d that the rear wheels 204 of the wheelchair 200 may comprise a wheel portion 220 and an inner rim 222 which the user may use to manually move the rear wheels 204 in order to drive the wheelchair 200. The wheel portion 220 and the inner rim 222 have a gap between them and when the wheelchair 200 is being coupled to the apparatus 100 the wheel portion 220 and the inner rim 222 will grip the respective wheel well 102. This will centre the rear wheels 204 correctly so that the apparatus 100 can be used with the wheels in proper alignment.

In Figure 3b we also enumerate the shadow of the wheelwell on the floor 202 as 206 to clearly illustrate that the wheelwell is not in contact with the floor 202.

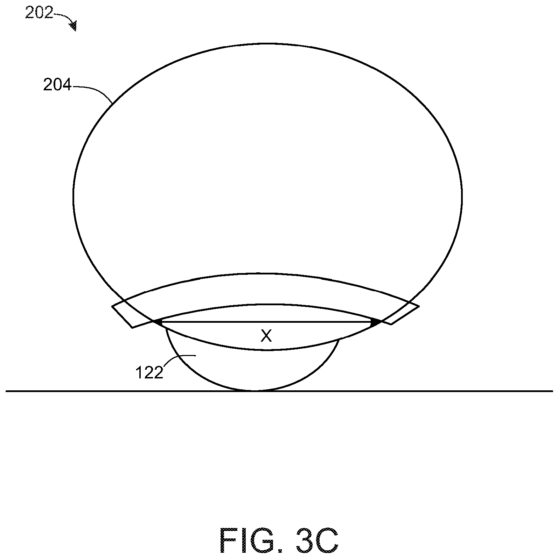

In this position the gyroscope wheels 122 will form the contact between the apparatus 100 and the floor 202 and, as the apparatus 100 is holding the rear wheels 204 and the front wheels 208 of the wheelchair off the floor 202, the gyroscope wheels 122 replace the wheels of the wheelchair as a contact point between the floor 202 and the wheelchair 100. This is illustrated in Figure 3c

Also, the rear wheels are now directly coupled to the wheelwells 102a and 102b and can therefore be used to move the wheelwells 102a and 102b. The user then uses the control stick 212 to power on the apparatus 100.

The apparatus 100 can therefore be mounted to a wheelchair 200 without any additional human assistance.

The wheelwells 102a and 102b couple to the wheels of the wheelchair in order to hold the wheelchair in an elevated position relative to a floor surface such that neither of the sets of wheels of the wheelchair are in contact with the floor surface or even need to be in contact with the floor surface. The wheelchair 200 is driven by the apparatus 100 due to the contact between the gyroscope wheels 122 and the floor surface.

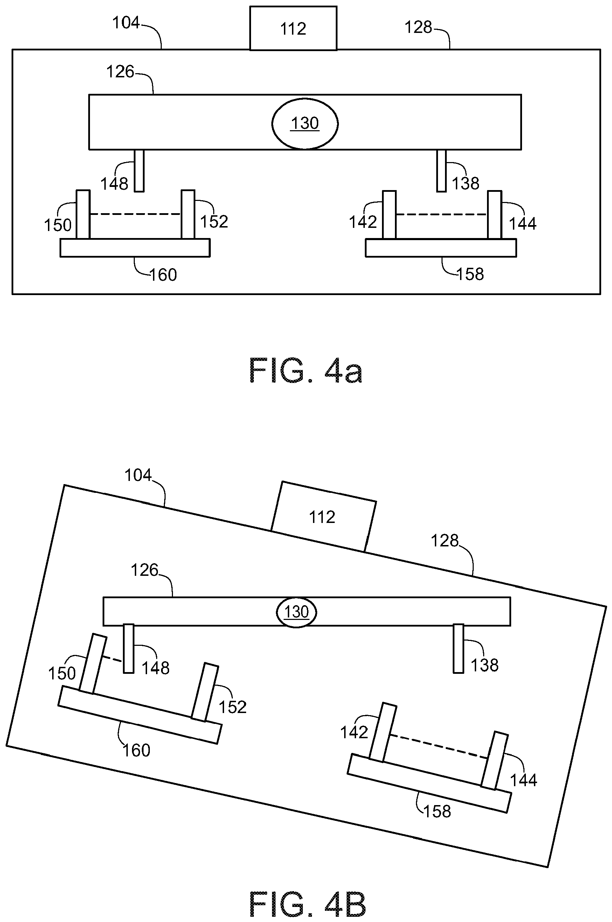

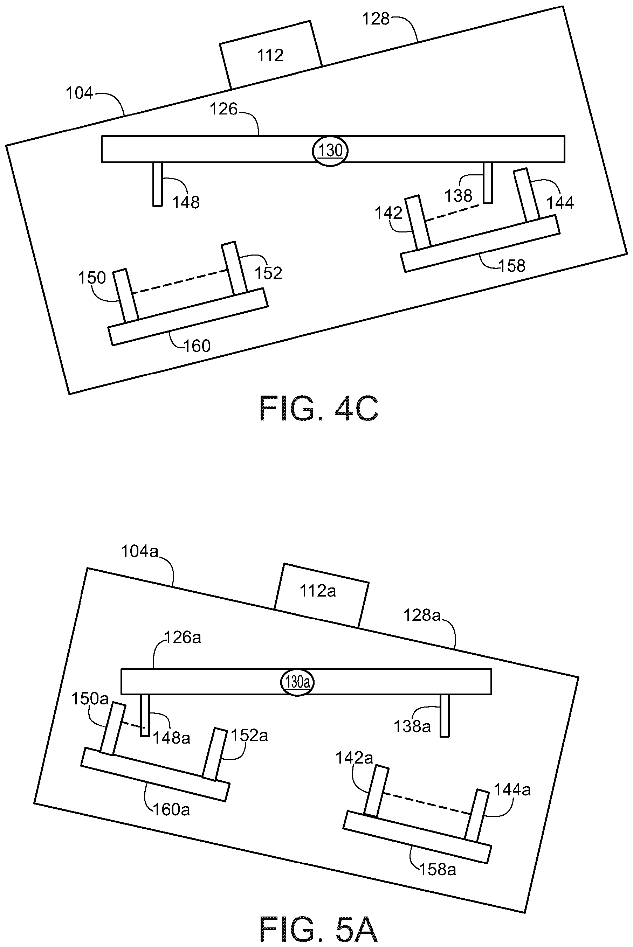

We will now describe how the apparatus 100 is used to move the wheelchair 200 with reference to Figures 4a, 4b and 4c.

When the apparatus is powered on the gyroscopic units 104a and 104b are in their steady state but the control circuitry 124 is drawing power from battery pack and providing it to the circuitry in base units 158 and 160 to power the infrared LEDs 150 and 142 and the infrared sensors 152 and 144. The steady state is illustrated in Figure 4a. The arm 112 corresponds to the respective arm 112a and 112b.

If the user of the wheelchair 200 wants the wheelchair to be moved in a forward direction they provide a single push to the rear wheels 204 of the wheelchair in a forward direction which causes both of the respectively coupled wheelwells 102a and 102b to be rotated in a backward direction by the rear wheels. This will cause the respective gyroscopic units 104a and 104b to be rotated in the same backward direction as the wheelwells 102a and 102b are directly coupled to the respective gyroscopic units 104a and 104b. This puts the respective gyroscopic units 104a and 104b into their forward state.

The backward movement of the gyroscopic units 104a and 104b will cause the housings 128 to be moved backward. This will mean that the directional movement panel 126 in each of the housings 128 will retain its horizontal state under gravity and the bases 158 and 160 will move in the first upward direction. This is illustrated in Figure 4b.

The backward movement of the gyroscopic units 104a and 104b will cause the arm 112 to be moved independently in the first upward direction about pivot point 108

As can be seen in Figure 4b, this means that at least some of the light emitted from infrared LED 150 will be deflected by the plastic wall member 148 and will not reach the infrared sensor 152. Responsive to the drop in light, the circuitry in base 160 will generate a forward direction signal which will be transmitted to control circuit 124 by the base unit 160.

Responsive to receiving the forward direction signal, the control circuit 124 will cause the gyroscope wheels 122 to rotate in a forward direction.

As the gyroscope wheels 122 are rotating in a forward direction and the gyroscope wheels 122 are replacing the rear wheels of the wheelchair as its driving means, the forward rotation of the gyroscope wheels 122 will drive the wheelchair in a forward direction.

That is to say, the wheels of the wheelchair are coupled to the apparatus 100 and used as actuators to move the wheelchair in a specified direction.

If the user of the wheelchair 200 wants the wheelchair to be moved in a backward direction they provide a single push to the rear wheels 204 of the wheelchair in a backward direction which causes both of the respectively coupled wheelwells 102a and 102b to be rotated in a forward direction backward by the rear wheels. This will cause the respective gyroscopic units 104a and 104b to be moved forwards as the wheelwells 102a and 102b are coupled to the respective gyroscopic units 104a and 104b. This puts the gyroscopic units 104a and 104b into their backward state.

The forward movement of the gyroscopic units 104a and 104b will cause the housings 128 to be moved forward. This will mean that the directional movement panel 126 in each of the housings 128 will retain its horizontal state under gravity and the bases 158 and 160 will move in the second upward direction. This is illustrated in Figure 4c.

As can be seen in Figure 4c, this means that at least some of the light emitted from infrared LED 142 will be deflected by the plastic wall member 138 and will not reach the infrared sensor 144. Responsive to the drop in light, the circuitry in base 158 will generate a backward direction signal which will be transmitted to control circuit 124 by the base unit 160.

Responsive to receiving the backward direction signal, the control circuit 124 will cause the gyroscope wheels 122 to rotate in a backward direction.

As the gyroscope wheels 122 are rotating in a backward direction and the gyroscope wheels 122 are replacing the rear wheels of the wheelchair as its driving means, the backward rotation of the gyroscope wheels 122 will drive the wheelchair in a backward direction.

In order to describe the action of turning left or right in the wheelchair 200 using the apparatus, we need to distinguish between the components of the respective gyroscopic units 104a and 104b.

Gyroscopic unit 104a comprises a housing 128a and within the housing 128a there is a directional movement panel 126a coupled to a first plastic wall member 138a, which slides between a respective forward infrared LED 142a, and a respective forward infrared sensor 144a and a second plastic wall member 148a which slides between a respective backward infrared LED 150a and a respective backward infrared sensor 152a.

The respective infrared LEDs 142a and 150a emit light which is detected by the respective infrared sensors 144a and 152a when the directional movement panel 126a is in a horizontal position relative to the housing 128a in which the gyroscopic unit 104a has not been moved.

Gyroscopic unit 104b comprises a housing 128b and within housing 128b there is a directional movement panel 126b is coupled to a first plastic wall member 138b which slides between a respective forward infrared LED 142b and a respective forward infrared sensor 144b and a second plastic wall member 148b which slides between a respective backward infrared LED 150b and a respective backward infrared sensor 152b.

The respective infrared LEDs 142b and 150b emit light which is detected by the respective infrared sensors 144b and 152b when the directional movement panel 126b is in a horizontal position relative to the housing 128b in which the gyroscopic unit 104b has not been moved.

If the user wishes to turn right then they provide a single push in a forward direction to the left rear wheel 204a and a single push in a backward direction to the right rear wheel 204b

This will cause the respective gyroscopic unit 104a to be rotated backward as the wheelwell 102a is coupled to the left rear wheel 204a and this in turn is coupled to the respective gyroscopic unit 104a. This will cause the arm 112a to be moved backward around the pivot point 108. This puts the gyroscopic unit 104a into its forward state.

The backward movement of the gyroscopic units 104a will cause the housings 128a to be moved backwards. This will mean that the directional movement panel 126a in each of the housings 128a will retain its horizontal state under gravity and the bases 158a and 160a will move in the first upward direction. This is illustrated in Figure 5a.

The backward movement of the gyroscopic units 104a will cause the left arm 112a to be moved independently in the first upward direction about pivot point 108.

As can be seen in Figure 5a, this means that at least some of the light emitted from infrared LED 150a will be deflected by the plastic wall member 148a and will not reach the infrared sensor 152a. Responsive to the drop in light, the circuitry in base 160a will generate a forward direction signal which will be transmitted to control circuit 124a by the base unit 160a.

Responsive to receiving the forward direction signal, the control circuit 124a will cause the gyroscope wheel 122a to rotate in a forward direction.

As the gyroscope wheel 122a is rotating in a forward direction and the gyroscope wheels 122 are replacing the rear wheels of the wheelchair as its driving means, the forward rotation of the gyroscope wheel 122a will drive the left hand side of the wheelchair 200 in a forward direction over the floor surface 202.

The single push to the right rear wheel 204b of the wheelchair 200 in a backward direction will cause the respectively coupled wheelwell 102b to be pushed forward by the right rear wheels. This will cause the respective gyroscopic unit 104b to be moved forward as the wheelwell 102b is coupled to the respective gyroscopic units 104b. This puts the gyroscopic unit 104b into its backward state.

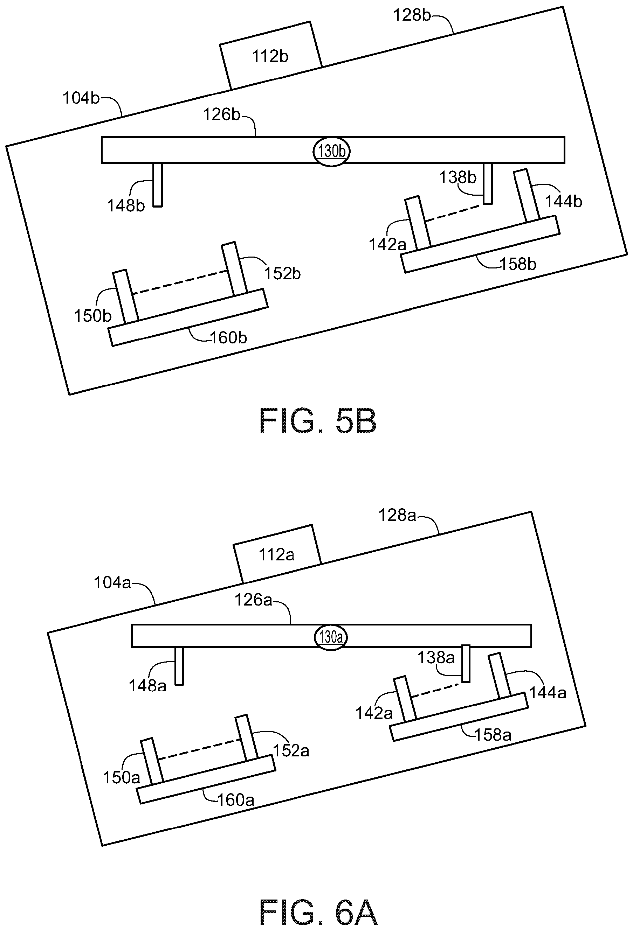

The forward movement of the gyroscopic unit 104b will cause the housing 128b to be moved forward. This will mean that the directional movement panel 126b in the housing 128b will retain its horizontal state under gravity and the bases 158b and 160b will move in the second upward direction. This is illustrated in Figure 5b.

As can be seen in Figure 5b, this means that at least some of the light emitted from infrared LED 142b will be deflected by the plastic wall member 138b and will not reach the infrared sensor 144b. Responsive to the drop in light, the circuitry in base 158b will generate a backward direction signal which will be transmitted to control circuit 124b by the base unit 158b.

Responsive to receiving the backward direction signal, the control circuit 124b will cause the gyroscope wheels 122b to rotate in a backward direction.

As the gyroscope wheel 122b is rotating in a backward direction and the gyroscope wheels 122b are replacing the rear wheels of the wheelchair as its driving means, the backward rotation of the gyroscope wheels 122b will drive the right side of the wheelchair in a backward direction.

As the gyroscope wheel 122a is being driven in a forward direction and the gyroscope wheel 122b is being driven in a backward direction the wheelchair 200 will be turned to the right.

If the user wishes to turn to the left, the user will provide a single push in a backward direction to the left rear wheel 204a and a single push in a forward direction to the right rear wheel 204b.

The single push to the left rear wheel 204a of the wheelchair in a backward direction will cause the respectively coupled wheelwell 102a to be pushed forward by the right rear wheel 204a. This will cause the respective gyroscopic unit 104a to be moved forward as the wheelwell 102a is coupled to the respective gyroscopic units 104a.

The forward movement of the gyroscopic unit 104a will cause the housing 128a to be moved forward. This will mean that the directional movement panel 126a in the housing 128a will retain its horizontal state under gravity and the bases 158a and 160a will move in the second upward direction. This is illustrated in Figure 6a. This puts the gyroscopic unit 104a into its forward state.

As can be seen in Figure 6a, this means that at least some of the light emitted from infrared LED 142a will be deflected by the plastic wall member 138a and will not reach the infrared sensor 144a. Responsive to the drop in light, the circuitry in base 158a will generate a backward direction signal which will be transmitted to control circuit 124a by the base unit 158a.

Responsive to receiving the backward direction signal, the control circuit 124a will cause the gyroscope wheel 122a to rotate in a backward direction.

As the gyroscope wheel 122a is rotating in a backward direction and the gyroscope wheels 122 are replacing the rear wheels of the wheelchair as its driving means, the backward rotation of the gyroscope wheel 122a will drive the left hand side of the wheelchair 200 in a backward direction.

The single push forward on the right rear wheel 204b will cause the respective gyroscopic unit 104b to be moved backward as the wheelwell 102b is coupled to the right rear wheel 204b and this in turn is coupled to the respective gyroscopic unit 104b.

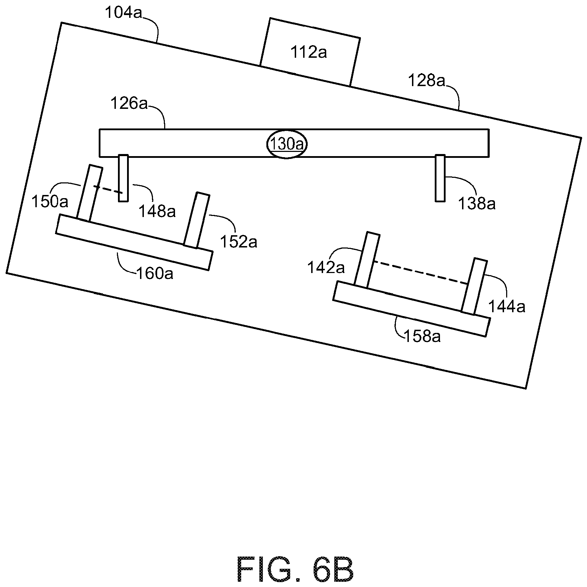

The backward movement of the gyroscopic units 104b will cause the housing 128b to be moved backward. This will mean that the directional movement panel 126b in each of the housings 128b will retain its horizontal state under gravity and the bases 158b and 160b will move in the first upward direction. This is illustrated in Figure 6b.

The gyroscopic unit 104b is therefore placed into its forward state.

The forward movement of the gyroscopic unit 104b will cause the right arm 112b to be moved independently in the first upward direction about pivot point 108

As can be seen in Figure 6b, this means that at least some of the light emitted from infrared LED 150b will be deflected by the plastic wall member 148b and will not reach the infrared sensor 152b. Responsive to the drop in light, the circuitry in base unit 160b will generate a forward direction signal which will be transmitted to control circuit 124b by the base unit 160b.

Responsive to receiving the forward direction signal, the control circuit 124b will cause the gyroscope wheel 122b to rotate in a forward direction.

As the gyroscope wheel 122b is rotating in a forward direction and the gyroscope wheels 122 are replacing the rear wheels of the wheelchair as its driving means, the forward rotation of the gyroscope wheel 122b will drive the right hand side of the wheelchair 200 in a forward direction.

As the left hand side of the wheelchair 200 is being driven in a backward direction and the right hand side of the wheelchair 200 is being driven in a forward direction the wheelchair 200 will be turned to the left.

The forward direction signal and backward direction signal are transmitted to the respective control circuitries with a speed value which corresponds to the velocity at which the respective wheel should move in the respective forward or backward direction. The speed value may be dependent upon the amount of light emitted by the respective infrared LED which is not being detected by the respective infrared sensor. That is to say, if the respective infrared sensor is not detecting any of the light emitted by the respective infrared then the speed value will be at a maximum value which can be set by the user. If only half of the light is being detected then the speed value will be at half the maximum value.

In order to stop using the apparatus and to decouple the wheels of the wheelchair from the apparatus 100, the user simply need to apply their hands to the wheels of the wheelchair to move both of the wheels of the wheelchair in a backward direction. If the wheelchair is not in motion under the driving force of the apparatus 100 then this step will not be necessary.

Moving both of the wheels in a backward direction whilst the gyroscope wheels 122 are in motion generates a stop signal to be transmitted from control circuitry 124 to the gyroscope wheels to cause the gyroscope wheels 122 to stop. This will bring the wheelchair to a stop.

Alternatively, the control stick 212 may comprise an emergency break button which, when pressed, transmits an emergency stop signal to the control circuitry 124. Responsive to receiving the emergency stop signal, the control circuitry 124 generates a stop signal which is transmitted from control circuitry to the gyroscope wheels 122 to cause them to stop.

When the gyroscope wheels 122 have been brought to a stop, the user may use the control stick 212 to power off the apparatus. The user may then push the wheels of the wheelchair in a forward direction to force the downward movement of the wheelwells 102a and 102b towards the floor surface. This will cause the apparatus 100 to roll on the gyroscope wheels 122 which will bring the wheelwells into a position in which they are in contact with the floor. The user can then simply roll the wheels of the wheelchair to push the wheelchair out of coupled engagement with the apparatus 100.

## Claims

1. A system for driving a wheelchair, the system comprising:
a driving module for driving the wheelchair across a surface;
a control module coupled to the driving module, wherein the control module is configured to be coupled to at least one wheelchair wheel and the control module is further configured to transmit an output to the driving module responsive to receiving an input generated by actuation of the at least one wheelchair wheel,
wherein the driving module, responsive to receiving the output from the control module, is configured to drive the wheelchair across the surface, wherein the system is configured to be rolled in a first direction to enable the at least one wheel to be coupled to the control module.

2. A system according to Claim 1, wherein the driving module comprises a pair of wheels each operative to be driven across a surface to drive the wheelchair across the surface; and/or
wherein the control module comprises wheel coupling members arranged to couple to a respective wheelchair wheel; and/or
wherein the wheel coupling members are wheelwells and/or wherein the control module is configured to be coupled to a pair of wheelchair wheels and is operative to receive a first input generated by actuation of a first wheel in the pair of wheelchair wheels and is further operative to receive a second input generated by actuation of a second wheel in the pair of wheelchair wheels, optionally wherein the control module is configured to receive the first input independently of the second input.

3. A system according to any preceding claim wherein the input generated by actuation of the at least one wheelchair wheel is generated by movement of the at least one wheelchair wheel; and/or
wherein the control module comprises at least one gyroscope which is operative to be actuated between a plurality of states responsive to receiving the input generated by actuation of the at least one wheelchair wheel.

4. A system according to Claim 3 wherein the actuation of the gyroscope into a first state generates an output indicating that the driving module should drive the wheelchair across the surface in a first direction and further wherein actuation of the gyroscope into a second state generates an output indicating that the driving module should drive the wheelchair across the surface in a second direction.

5. A system according to Claim 4 wherein the at least one gyroscope comprises first and second gyroscopes, wherein each gyroscope is coupled to a respective first or second wheel coupling mechanism, optionally wherein each of the first and second gyroscopes is independently coupled to a central articulation point.

6. A system according to Claim 5wherein the respective coupling between the first and second gyroscope and the central articulation point is adjustable to adjust the operating width of the apparatus.

7. A system according to any of Claims 5 or 6 wherein the respective coupling between the first and second gyroscopes and the central articulation point comprises a first engagement member disposed on an arm extending from the articulation point and the respective first and second gyroscope comprises a plurality of recesses disposed in a row along a surface of the gyroscope wherein each recess is shaped to receive the first engagement member to couple the respective first or second gyroscope to the central articulation point, optionally wherein the first engagement member comprises a plurality of engagement protrusions, wherein each of the engagement protrusions is received in a respective plurality of the recesses.

8. A system according to Claim 7 wherein the first engagement member comprises a plurality of engagement protrusions, wherein each of the engagement protrusions is received in a respective plurality of the recesses.

9. A system according to any of Claims5 to 8 wherein the actuation of the gyroscope into the first state is responsive to a first movement of the respectively coupled wheel coupling mechanism and further wherein the actuation of the gyroscope into the second state is responsive to a second movement of the respectively coupled wheel coupling mechanism.

10. A system according to any preceding claim wherein the control module comprises first and second control sub-modules, wherein each control sub-module is operative to receive input from a respective one of a first or second wheel coupling mechanism which is configured to be coupled to a wheel of the wheelchair, optionally wherein each of the control sub-modules comprises a switch which is actuatable between a plurality of states responsive to receiving the input generated by actuation of the at least one wheelchair wheel.

11. A system according to Claim 10 wherein actuation of the switch into a first state generates an output indicating that the driving module should drive the wheelchair across the surface in a first direction and further wherein actuation of the switch into a second state generates an output indicating the driving module should drive the wheelchair across the surface in a second direction.

12. A system according to Claim 5 wherein the respective coupling between the first and second control sub-modules and the central articulation point is adjustable to adjust the operating width of the apparatus.

13. A system according to any of Claims 5 or 6 wherein the respective coupling between the first and second control sub-modules and the central articulation point comprises a first engagement member disposed on an arm extending from the articulation point and the respective first and second gyroscope comprises a plurality of recesses disposed in a row along a surface of the control sub-module wherein each recess is shaped to receive the first engagement member to couple the respective first or second control sub-module to the central articulation point.

14. A system according to Claim 4 or Claim 11 wherein the driving module drives the wheelchair across the surface in a direction indicated by the output generated by actuation of the switch or the gyroscope.

15. A system according to any preceding claim wherein, responsive to the coupling of the control module to the at least one wheel, the control module levers the wheels into an elevated position relative to the surface.

## Patentansprüche

1. Ein System zum Antreiben eines Rollstuhls, wobei das System Folgendes beinhaltet:
ein Antriebsmodul zum Antreiben des Rollstuhls über eine Oberfläche hinweg;
ein Steuermodul, das mit dem Antriebsmodul gekoppelt ist, wobei das Steuermodul konfiguriert ist, um mit mindestens einem Rollstuhlrad gekoppelt zu werden, und das Steuermodul ferner konfiguriert ist, um als Reaktion auf den Empfang einer Eingabe,
die durch die Betätigung des mindestens einen Rollstuhlrads erzeugt wird, eine Ausgabe an das Antriebsmodul zu senden, wobei das Antriebsmodul als Reaktion auf den Empfang der Ausgabe von dem Steuermodul konfiguriert ist, um den Rollstuhl über die Oberfläche hinweg anzutreiben, wobei das System konfiguriert ist, um in eine erste Richtung gerollt zu werden, damit das mindestens eine Rad mit dem Steuermodul gekoppelt werden kann.

2. System gemäß Anspruch 1, wobei das Antriebsmodul ein Paar Räder beinhaltet, die betriebsfähig sind, um jeweils über eine Oberfläche angetrieben werden zu können, um den Rollstuhl über die Oberfläche hinweg anzutreiben; und/oder
wobei das Steuermodul Radkopplungselemente beinhaltet, die eingerichtet sind, um mit einem jeweiligen Rollstuhlrad gekoppelt zu werden; und/oder
wobei die Radkopplungselemente Radkästen sind und/oder wobei das Steuermodul konfiguriert ist, um mit einem Paar von Rollstuhlrädern gekoppelt zu werden und betriebsfähig ist, um eine erste Eingabe zu empfangen, die durch die Betätigung eines ersten Rades in dem Paar von Rollstuhlrädern erzeugt wird, und ferner betriebsfähig ist, um eine zweite Eingabe zu empfangen, die durch die Betätigung eines zweiten Rades in dem Paar von Rollstuhlrädern erzeugt wird, wobei das Steuermodul optional konfiguriert ist, um die erste Eingabe unabhängig von der zweiten Eingabe zu empfangen.

3. System gemäß einem der vorhergehenden Ansprüche, wobei die durch Betätigung des mindestens einen Rollstuhlrads erzeugte Eingabe durch die Bewegung des mindestens einen Rollstuhlrads erzeugt wird; und/oder
wobei das Steuermodul mindestens ein Gyroskop beinhaltet, das als Reaktion auf den Empfang der durch die Betätigung des mindestens einen Rollstuhlrads erzeugten Eingabe zwischen einer Vielzahl von Zuständen betätigt werden kann.

4. System gemäß Anspruch 3, wobei die Betätigung des Gyroskops in einen ersten Zustand eine Ausgabe erzeugt, die anzeigt, dass das Antriebsmodul den Rollstuhl in einer ersten Richtung über die Oberfläche hinweg antreiben soll, und wobei ferner die Betätigung des Gyroskops in einen zweiten Zustand eine Ausgabe erzeugt, die anzeigt, dass das Antriebsmodul den Rollstuhl in einer zweiten Richtung über die Oberfläche hinweg antreiben soll.

5. System gemäß Anspruch 4, wobei das mindestens eine Gyroskop ein erstes und ein zweites Gyroskop beinhaltet, wobei jedes Gyroskop mit einem jeweiligen ersten oder zweiten Radkopplungsmechanismus gekoppelt ist, wobei optional jedes von dem ersten und dem zweiten Gyroskop unabhängig mit einem zentralen Gelenkpunkt gekoppelt ist.

6. System gemäß Anspruch 5, wobei die jeweilige Kopplung zwischen dem ersten und dem zweiten Gyroskop und dem zentralen Gelenkpunkt einstellbar ist, um die Betriebsbreite der Vorrichtung einzustellen.

7. System gemäß einem der Ansprüche 5 oder 6, wobei die jeweilige Kopplung zwischen dem ersten und dem zweiten Gyroskop und dem zentralen Gelenkpunkt ein erstes Eingriffselement beinhaltet, das an einem Arm angeordnet ist, der sich von dem Gelenkpunkt erstreckt, und das jeweilige erste und zweite Gyroskop eine Vielzahl von Aussparungen beinhaltet, die in einer Reihe entlang einer Oberfläche des Gyroskops angeordnet sind, wobei jede Aussparung geformt ist, um das erste Eingriffselement aufzunehmen, um das jeweilige erste oder zweite Gyroskop mit dem zentralen Gelenkpunkt zu verbinden, wobei das erste Eingriffselement optional eine Vielzahl von Eingriffsvorsprüngen beinhaltet, wobei jeder der Eingriffsvorsprünge in einer entsprechenden Vielzahl der Aussparungen aufgenommen wird.

8. System gemäß Anspruch 7, wobei das erste Eingriffselement eine Vielzahl von Eingriffsvorsprüngen beinhaltet, wobei jeder der Eingriffsvorsprünge in einer entsprechenden Vielzahl der Aussparungen aufgenommen wird.

9. System gemäß einem der Ansprüche 5 bis 8, wobei die Betätigung des Gyroskops in den ersten Zustand auf eine erste Bewegung des jeweils gekoppelten Radkopplungsmechanismus reagiert und wobei ferner die Betätigung des Gyroskops in den zweiten Zustand auf eine zweite Bewegung des jeweils gekoppelten Radkopplungsmechanismus reagiert.

10. System gemäß einem der vorhergehenden Ansprüche, wobei das Steuermodul ein erstes und ein zweites Steueruntermodul beinhaltet, wobei jedes Steueruntermodul betriebsfähig ist, um eine Eingabe von einem jeweiligen von einem ersten oder zweiten Radkopplungsmechanismus zu empfangen, der konfiguriert ist, um mit einem Rad des Rollstuhls gekoppelt zu werden, wobei optional jedes der Steueruntermodule einen Schalter beinhaltet, der als Reaktion auf den Empfang der Eingabe, die durch die Betätigung des mindestens einen Rollstuhlrads erzeugt wird, zwischen einer Vielzahl von Zuständen betätigt werden kann.

11. System gemäß Anspruch 10, wobei die Betätigung des Schalters in einen ersten Zustand ein Ausgangssignal erzeugt, das anzeigt, dass das Antriebsmodul den Rollstuhl in einer ersten Richtung über die Oberfläche hinweg antreiben soll, und wobei ferner die Betätigung des Schalters in einen zweiten Zustand ein Ausgangssignal erzeugt, das anzeigt, dass das Antriebsmodul den Rollstuhl in einer zweiten Richtung über die Oberfläche hinweg antreiben soll.

12. System gemäß Anspruch 5, wobei die jeweilige Kopplung zwischen dem ersten und dem zweiten Steueruntermodul und dem zentralen Gelenkpunkt einstellbar ist, um die Betriebsbreite der Vorrichtung einzustellen.

13. System gemäß einem der Ansprüche 5 oder 6, wobei die jeweilige Kopplung zwischen dem ersten und dem zweiten Steueruntermodul und dem zentralen Gelenkpunkt ein erstes Eingriffselement beinhaltet, das an einem Arm angeordnet ist, der sich von dem Gelenkpunkt erstreckt, und das jeweilige erste und zweite Gyroskop eine Vielzahl von Aussparungen beinhaltet, die in einer Reihe entlang einer Oberfläche des Steueruntermoduls angeordnet sind, wobei jede Aussparung geformt ist, um das erste Eingriffselement aufzunehmen, um das jeweilige erste oder zweite Steueruntermodul mit dem zentralen Gelenkpunkt zu koppeln.

14. System gemäß Anspruch 4 oder Anspruch 11, wobei das Antriebsmodul den Rollstuhl in einer Richtung über die Oberfläche hinweg antreibt, die durch die von der Betätigung des Schalters oder des Gyroskops erzeugten Ausgabe angezeigt wird.

15. System gemäß einem der vorhergehenden Ansprüche, wobei das Steuermodul als Reaktion auf die Kopplung des Steuermoduls mit dem mindestens einen Rad die Räder in eine erhöhte Position relativ zu der Oberfläche hebelt.

## Revendications

1. Un système destiné à l'entraînement d'un fauteuil roulant, le système comprenant :
un module d'entraînement destiné à l'entraînement du fauteuil roulant sur une surface ;
un module de commande couplé au module d'entraînement, où le module de commande est configuré pour être couplé à au moins une roue de fauteuil roulant et le module de commande est en outre configuré pour transmettre une sortie au module d'entraînement en réponse à la réception d'une entrée générée par l'actionnement de l'au moins une roue de fauteuil roulant, où le module d'entraînement, en réponse à la réception de la sortie en provenance du module de commande, est configuré pour entraîner le fauteuil roulant sur la surface, où le système est configuré pour qu'on le fasse rouler dans une première direction afin de permettre à l'au moins une roue d'être couplée au module de commande.

2. Un système selon la revendication 1, où le module d'entraînement comprend une paire de roues, chacune fonctionnelle pour être entraînée sur une surface afin d'entraîner le fauteuil roulant sur la surface ; et/ou
où le module de commande comprend des éléments de couplage de roue conçus pour se coupler à une roue de fauteuil roulant respective ; et/ou
où les éléments de couplage de roue sont des logements de roue et/ou où le module de commande est configuré pour être couplé à une paire de roues de fauteuil roulant et est fonctionnel pour recevoir une première entrée générée par l'actionnement d'une première roue de la paire de roues de fauteuil roulant et est en outre fonctionnel pour recevoir une deuxième entrée générée par l'actionnement d'une deuxième roue de la paire de roues de fauteuil roulant, facultativement où le module de commande est configuré pour recevoir la première entrée indépendamment de la deuxième entrée.

3. Un système selon n'importe quelle revendication précédente où l'entrée générée par l'actionnement de l'au moins une roue de fauteuil roulant est générée par un déplacement de l'au moins une roue de fauteuil roulant ; et/ou
où le module de commande comprend au moins un gyroscope qui est fonctionnel pour être actionné en un état parmi une pluralité d'états en réponse à la réception de l'entrée générée par l'actionnement de l'au moins une roue de fauteuil roulant.

4. Un système selon la revendication 3 où l'actionnement du gyroscope en un premier état génère une sortie indiquant que le module d'entraînement devrait entraîner le fauteuil roulant sur la surface dans une première direction et en outre où l'actionnement du gyroscope en un deuxième état génère une sortie indiquant que le module d'entraînement devrait entraîner le fauteuil roulant sur la surface dans une deuxième direction.

5. Un système selon la revendication 4 où l'au moins un gyroscope comprend des premier et deuxième gyroscopes, où chaque gyroscope est couplé à un premier ou un deuxième mécanisme de couplage de roue respectif, facultativement où chacun des premier et deuxième gyroscopes est indépendamment couplé à un point d'articulation central.

6. Un système selon la revendication 5 où le couplage respectif entre le premier et le deuxième gyroscope et le point d'articulation central est réglable afin de régler la largeur de fonctionnement de l'appareil.

7. Un système selon n'importe lesquelles des revendications 5 ou 6 où le couplage respectif entre les premier et deuxième gyroscopes et le point d'articulation central comprend un premier élément de mise en prise disposé sur un bras s'étendant à partir du point d'articulation et le premier et le deuxième gyroscope respectif comprend une pluralité de renfoncements disposés en rangée le long d'une surface du gyroscope où chaque renfoncement est formé de façon à recevoir le premier élément de mise en prise afin de coupler le premier ou le deuxième gyroscope respectif au point d'articulation central, facultativement où le premier élément de mise en prise comprend une pluralité de saillies de mise en prise, où chacune des saillies de mise en prise est reçue dans une pluralité respective des renfoncements.

8. Un système selon la revendication 7 où le premier élément de mise en prise comprend une pluralité de saillies de mise en prise, où chacune des saillies de mise en prise est reçue dans une pluralité respective des renfoncements.

9. Un système selon n'importe lesquelles des revendications 5 à 8 où l'actionnement du gyroscope en le premier état répond à un premier déplacement du mécanisme de couplage de roue respectivement couplé et en outre où l'actionnement du gyroscope en le deuxième état répond à un deuxième déplacement du mécanisme de couplage de roue respectivement couplé.

10. Un système selon n'importe quelle revendication précédente où le module de commande comprend des premier et deuxième sous-modules de commande, où chaque sous-module de commande est fonctionnel pour recevoir une entrée en provenance d'un mécanisme respectif parmi un premier et un deuxième mécanisme de couplage de roue qui est configuré pour être couplé à une roue du fauteuil roulant, facultativement où chacun des sous-modules de commande comprend un commutateur qui est actionnable en un état parmi une pluralité d'états en réponse à la réception de l'entrée générée par l'actionnement de l'au moins une roue de fauteuil roulant.

11. Un système selon la revendication 10 où l'actionnement du commutateur en un premier état génère une sortie indiquant que le module d'entraînement devrait entraîner le fauteuil roulant sur la surface dans une première direction et en outre où l'actionnement du commutateur en un deuxième état génère une sortie indiquant que le module d'entraînement devrait entraîner le fauteuil roulant sur la surface dans une deuxième direction.

12. Un système selon la revendication 5 où le couplage respectif entre les premier et deuxième sous-modules de commande et le point d'articulation central est réglable afin de régler la largeur de fonctionnement de l'appareil.

13. Un système selon n'importe lesquelles des revendications 5 ou 6 où le couplage respectif entre les premier et deuxième sous-modules de commande et le point d'articulation central comprend un premier élément de mise en prise disposé sur un bras s'étendant à partir du point d'articulation et le premier et le deuxième gyroscope respectif comprend une pluralité de renfoncements disposés en rangée le long d'une surface du sous-module de commande où chaque renfoncement est formé de façon à recevoir le premier élément de mise en prise afin de coupler le premier ou le deuxième sous-module de commande respectif au point d'articulation central.

14. Un système selon la revendication 4 ou la revendication 11 où le module d'entraînement entraîne le fauteuil roulant sur la surface dans une direction indiquée par la sortie générée par l'actionnement du commutateur ou du gyroscope.

15. Un système selon n'importe quelle revendication précédente où, en réponse au couplage du module de commande à l'au moins une roue, le module de commande fait passer par effet levier les roues en position surélevée relativement à la surface.
